# EUROPÄISCHE PATENTSCHRIFT

(11) **EP 1 269 037 B1**
(45) Veröffentlichungstag und Bekanntmachung des Hinweises auf die Patenterteilung: **21.12.2005**
(21) Anmeldenummer: 00987178.1
(22) Anmeldetag: 23.11.2000
(51) Int. Cl.: F16D 65/16

(54) **ELEKTROMECHANISCHE RADBREMSVORRICHTUNG**
ELECTROMECHANICAL WHEEL BRAKE DEVICE
DISPOSITIF DE FREINAGE DE ROUE ELECTROMECANIQUE

(30) Priorität: 25.03.2000 DE 10014993
(43) Veröffentlichungstag der Anmeldung: 02.01.2003
(73) Patentinhaber: ROBERT BOSCH GMBH, 70442 Stuttgart (DE)
(72) Erfinder: HILZINGER, Juergen, 71229 Leonberg (DE)
(86) Internationale Anmeldenummer: PCT/DE2000/004147
(87) Internationale Veröffentlichungsnummer: WO 2001/073311

(56) Entgegenhaltungen:
- DE-A- 19 750 273
- DE-A- 19 817 892
- US-A- 4 546 297
- US-A- 5 655 636

## Beschreibung

### Stand der Technik

Die Erfindung geht aus von einer elektromechanischen Radbremsvorrichtung nach der Gattung des Patentanspruchs 1.

Es ist schon eine solche Radbremsvorrichtung bekannt (DE 197 50 273 A1), bei der eine mittels einer elektromotorisch rotierend angetriebenen Mutter längsverschiebbare Gewindespindel eines Rollengewindegetriebes dem Andrücken eines Bremsbelags gegen eine Bremsscheibe dient. Die Gewindespindel ist aus zwei formschlüssig axial ineinandergreifenden Teilen ausgebildet: Ein innerer Teil der Gewindespindel ist im Normalbetrieb der Radbremsvorrichtung mit einer elektromagnetisch schaltbaren Kupplung axial feststehend sowie unverdrehbar gehalten; ein äusserer Teil ist auf dem inneren Teil längsverschiebbar geführt. Um bei einer fehlerhaften Dauerbestromung des elektrischen Antriebsmotors im Rückstellhub des äusseren Teils der Gewindespindel eine Beschädigung der Radbremsvorrichtung zu vermeiden, ist die Kupplung auch mechanisch von diesem Teil der Gewindespindel schaltbar. Die Gewindespindel wird hierdurch frei drehbar und wirkungsmäßig vom Elektromotor getrennt.

### Vorteile der Erfindung

Die erfindungsgemäße elektromechanische Radbremsvorrichtung mit den Merkmalen des Patentanspruchs 1 hat demgegenüber den Vorteil, dass die Schaltkupplung zur Trennung des Elektromotors von der Gewindespindel im Vergleich mit der bekannten Ausführungsform mit weniger Bauteilen verwirklicht ist. Dadurch können das Gewicht und der Einbauraum der Radbremsvorrichtung verringert werden. Außerdem wird aufgrund der verminderten Bauteilezahl die Funktionssicherheit der Radbremsvorrichtung verbessert.

Durch die in den Unteransprüchen aufgeführten Maßnahmen sind vorteilhafte Weiterbildungen und Verbesserungen der im Patentanspruch 1 beschriebenen elektromechanischen Radbremsvorrichtung gegeben.

Mit der im Anspruch 2 gekennzeichneten Ausgestaltung der elektromechanischen Radbremsvorrichtung ist auf einfache Weise ein Schließen der Schaltkupplung durch Drehrichtungsumkehr des Elektromotors möglich.

In Anspruch 6 sind zweckmäßige Bauformen der Schaltkupplung angegeben.

### Zeichnungen

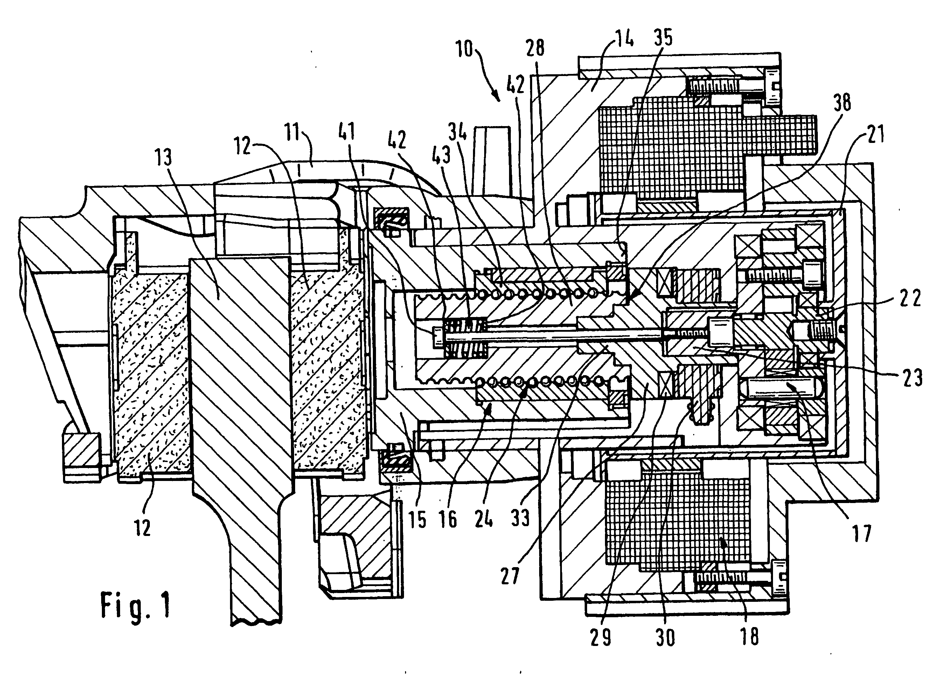

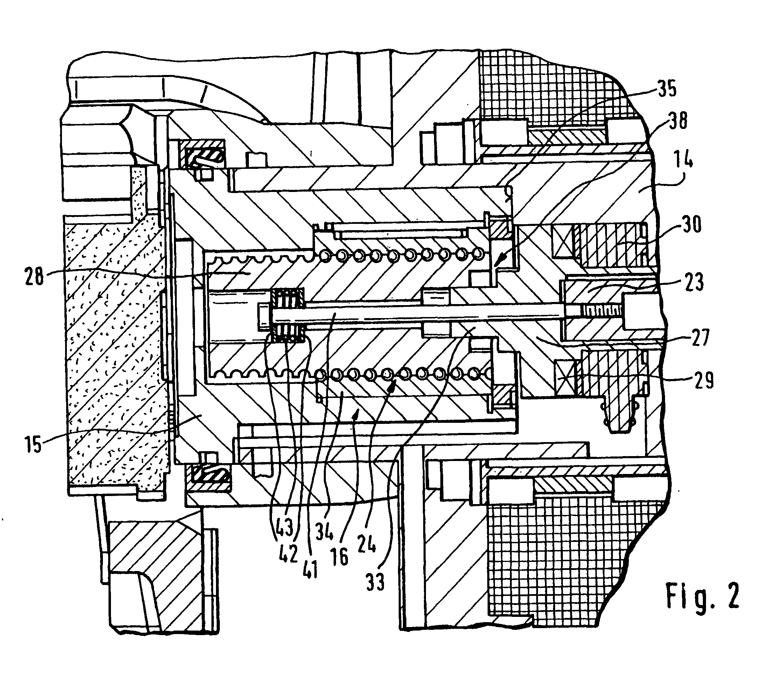

Ein Ausführungsbeispiel der Erfindung ist in den Zeichnungen vereinfacht dargestellt und in der nachfolgenden Beschreibung näher erläutert. Es zeigen Figur 1 eine elektromechanische Radbremsvorrichtung im Längsschnitt mit einer Schaltkupplung in einer Gewindespindel und Figur 2 einen Ausschnitt aus Figur 1 in vergrößertem Maßstab mit getrennter Schaltkupplung der Gewindespindel.

### Beschreibung des Ausführungsbeispiels

Eine in den Zeichnungen dargestellte elektromechanische Bremsvorrichtung 10 für Kraftfahrzeuge ist als Scheibenbremse ausgebildet. Sie weist einen Schwimmsattel 11 auf, in dem ein Paar Bremsbeläge 12 beiderseits einer als rotierendes Reibelement wirkenden Bremsscheibe 13 angebracht sind. Zum Anpressen der Bremsbeläge 12 gegen die Bremsscheibe 13 sowie zum Lösen der Bremsbeläge von der Bremsscheibe ist in einem mit dem Schwimmsattel 11 vereinigten Gehäuse 14 ein längsverschiebbarer Bremskolben 15 angeordnet. In dem Gehäuse 14 sind ferner ein Schraubengetriebe 16 zum Verschieben des Bremskolbens 15, ein mit dem Schraubengetriebe 16 verbundenes Untersetzungsgetriebe 17 sowie ein Elektromotor 18 aufgenommen.

Der nicht detailliert dargestellte Elektromotor 18 hat einen Rotor 21, welcher mit einem Eingangsglied 22 des als Planetengetriebe ausgebildeten Untersetzungsgetriebes 17 drehfest verbunden ist. Das Untersetzungsgetriebe 17 hat ein Ausgangsglied 23 für den drehmomentübertragenden Angriff an einer Gewindespindel 24 des als Kugelgewindegetriebe ausgebildeten Schraubengetriebes 16.

Die Gewindespindel 24 besteht aus zwei durch Formschluss aneinander angreifenden Teilen 27 und 28. Der seitens des Untersetzungsgetriebes 17 angeordnete Gewindespindelteil 27 ist mittels eines Axiallagers 29 axial unverschiebbar aber drehbar in dem Gehäuse 14 der Radbremsvorrichtung 10 gelagert. Zwischen dem Axiallager 29 des drehfest mit dem Ausgangsglied 23 des Untersetzungsgetriebes 17 verbundenen Gewindespindelteils 27 und dem Gehäuse 14 ist ein Kraftsensor 30 zum Erfassen der von den Bremsbelägen 12 auf die Bremsscheibe 13 ausgeübten Bremskraft angeordnet.

Der Gewindespindelteil 27 ist auf seiner vom Ausgangsglied 23 abgewandten Seite mit einem abgestuften Zapfen 33 versehen. Auf diesem Zapfen 33 ist der sich innerhalb des Bremskolbens 15 erstreckende Gewindespindelteil 28 gelagert. Diesem ist eine Mutter 34 zugeordnet, welche drehfest und axial unverschieblich mit dem Bremskolben 15 vereinigt ist. Dem Bremskolben 15 ist auf seiner von der Bremsscheibe 13 abgewandten Seite ein Rückhub begrenzender Anschlag 35 des Gehäuses 14 der Radbremsvorrichtung 10 zugeordnet. In der Praxis nimmt der Bremskolben 15 von dem Anschlag 35 einen mehr oder weniger großen Abstand ein, welcher vom Verschleiss der Bremsbeläge 12 sowie der Bremsscheibe 13 und vom eingestellten Lüftspiel zwischen den Bremsbelägen und der Bremsscheibe abhängt.

Der bereits erwähnte Formschluss zwischen den beiden Teilen 27 und 28 der Gewindespindel 24 ist mittels einer Schaltkupplung 38 erzielt, welche als Zahnkupplung oder als Klauenkupplung gestaltet sein kann. Die Schaltkupplung ist umfangsseitig des Zapfens 33 und/oder stirnseitig an den beiden Teilen 27 und 28 der Gewindespindel 24 ausgebildet. In der in Figur 1 gezeichneten Stellung steht der auf dem Zapfen 33 geführte Gewindespindelteil 28 durch die geschlossene Schaltkupplung 38 mit dem Gewindespindelteil 27 in drehfester Verbindung.

Die beiden Gewindespindelteile 27 und 28 sind zentrisch von einer Zugstange 41 durchdrungen, welche die Form einer Zylinderschraube hat und in das Ausgangsglied 23 des Untersetzungsgetriebes 17 eingeschraubt ist. Auf der axial feststehenden Zugstange 41 sind kopfseitig zwei Scheiben 42 und zwischen diesen eine vorgespannte Druckfeder 43 aufgenommen. Die Druckfeder 43 übt auf den Gewindespindelteil 28 eine gegen den Gewindespindelteil 27 gerichtete Federkraft aus. Durch Überwinden der Federkraft ist die Schaltkupplung 38 trennbar.

Die elektromechanische Radbremsvorrichtung 10 hat folgende Wirkungsweise:

Zum Betätigen der Radbremsvorrichtung 10 wird der Elektromotor 18 bestromt. Die Drehbewegung des Rotors 21 wird mittels des Untersetzungsgetriebes 17 auf die Gewindespindel 24 des Schraubengetriebes 16 übertragen. Das Schraubengetriebe 16 wandelt die Drehbewegung in eine Translationsbewegung des Bremskolbens 15. Dieser drückt in bekannter Weise die beiden Bremsbeläge 12 gegen die Bremsscheibe 13.

Zum Lösen der Radbremsvorrichtung 10 wird der Elektromotor 18 in Gegendrehrichtung bestromt. Der in das Gehäuse 14 zurückgeführte Bremskolben 15 hebt die Bremsbeläge 12 von der Bremsscheibe 13 ab. Bei ungestörter Betriebsweise der Radbremsvorrichtung 10 erreicht der Bremskolben 15 den Anschlag 35 des Gehäuses 14 nicht.

Bleibt jedoch fehlerhafterweise die Bestromung des Elektromotors 18 aufrechterhalten, so trifft der Bremskolben 15 auf den Anschlag 35. Dies hat zur Folge, dass sich der weiterhin angetriebene Gewindespindelteil 28 in Richtung auf die Bremsscheibe 13 in die axial feststehende, undrehbare Mutter 34 hineinschraubt. Die gegen die Kraft der Druckfeder 43 erfolgende Längsverschiebung des Gewindespindelteils 28 auf dem Zapfen 33 des axial feststehenden Gewindespindelteils 27 hat nach einer begrenzten Wegstrecke ein Trennen der Schaltkupplung 38 zur Folge. Dieser Zustand ist in Figur 2 der Zeichnung dargestellt. Der fehlende Formschluss zwischen den beiden Teilen 27 und 28 der Gewindespindel 24 trennt den mutterseitigen Gewindespindelteil 28 vom elektromotorischen Antrieb, so daß eine Überlastung und Zerstörung der Radbremsvorrichtung 10 sicher vermieden ist.

Nach Beseitigung der elektrischen Störung wird der Elektromotor 18 im Bremsbetätigungssinn betrieben, was aufgrund des Reibschlusses der Zugstange 41 mit dem Gewindespindelteil 28 ein Zurücksetzen dieses Spindelteiles und Wiederherstellen des Formschlusses mit dem Gewindespindelteil 27 bewirkt.

## Patentansprüche

1. Elektromechanische Radbremsvorrichtung (10) für ein Kraftfahrzeug, die elektromechanische Radbremsvorrichtung mit:
- einem Elektromotor (18) zum Betätigen und Lösen der Radbremsvorrichtung (10),
- einem Schraubengetriebe (16) zum Wandeln der Drehbewegung des Elektromotors (18) in eine Translationsbewegung, um einen Bremsbelag (12) gegen eine Bremsscheibe (13) zu drücken und von dieser zurückzuziehen, wobei das Schraubengetriebe (16) eine Mutter (34) und eine aus zwei durch Formschluss aneinander angreifenden Teilen (27, 28) bestehende Gewindespindel (24) aufweist,
- sowie mit einer beim Zurückziehen des Bremsbelags (12) von der Bremsscheibe (13) im Fehlerfall wenigstens mittelbar betätigbaren Schaltkupplung (38), mit welcher der Elektromotor (18) wirkungsmäßig von einem Teil (28) der Gewindespindel (24) trennbar ist,
**gekennzeichnet durch** die weiteren Merkmale:
- der Elektromotor (18) greift an einem Teil (27) der Gewindespindel (24) an, deren anderer Teil (28) mit der Mutter (34) des Schraubengetriebes (16) in Eingriff steht,
- der an der Gewindespindel (24) längs bewegbaren Mutter (34) des Schraubengetriebes (16) ist wenigstens mittelbar ein Rückhub begrenzender Anschlag (35) zugeordnet,
- die beiden Teile (27, 28) der Gewindespindel (24) sind beim wenigstens mittelbaren Angriff der Mutter (34) des Schraubengetriebes (16) an dem Anschlag (35) mittels der Schaltkupplung (38) trennbar.

2. Elektromechanische Radbremsvorrichtung nach Anspruch 1, **dadurch gekennzeichnet, dass** der eine Teil (27) der Gewindespindel (24) axial feststehend in einem Gehäuse (14) der Radbremsvorrichtung (10) gelagert ist, während der mit der Mutter (34) des Schraubengetriebes (16) in Eingriff stehende andere Teil (28) der Gewindespindel (24) gegen Federkraft axial verschiebbar von dem einen Teil (27) wirkungsmäßig trennbar ist.

3. Elektromechanische Radbremsvorrichtung nach Anspruch 2, **dadurch gekennzeichnet, dass** der eine Teil (28) der Gewindespindel (24) von einer axial feststehenden Zugstange (41) mit einer Druckfeder (43) zentrisch durchdrungen ist, welche den einen Teil (28) mit einer gegen den anderen Teil (27) der Gewindespindel (24) gerichteten Federkraft belastet.

4. Elektromechanische Radbremsvorrichtung nach Anspruch 1 oder 2, **dadurch gekennzeichnet, dass** der eine Teil (28) der Gewindespindel (24) kupplungsseitig auf einem Zapfen (33) des anderen Teils (27) der Gewindespindel (24) längsverschiebbar geführt ist.

5. Elektromechanische Radbremsvorrichtung nach Anspruch 4, **dadurch gekennzeichnet, dass** die Schaltkupplung (38) umfangsseitig des Zapfens (33) und/oder stirnseitig an den beiden Teilen (27, 28) der Gewindespindel (24) ausgebildet ist.

6. Elektromechanische Radbremsvorrichtung nach Anspruch 1 oder 5, **dadurch gekennzeichnet, dass** die Schaltkupplung (38) als Zahnkupplung oder Klauenkupplung ausgebildet ist.

## Claims

1. Electromechanical wheel-braking device (10) for a motor vehicle, the electromechanical wheel-braking device having,
- an electric motor (18) for actuating and releasing the wheel-braking device (10),
- a screw mechanism (16) for converting the rotational movement of the electric motor (18) into a translationary movement, in order to press a brake lining (12) against the brake disc (13) and retract it from the latter, the screw mechanism (16) having a nut (34) and a threaded spindle (24) consisting of two parts (27, 28) engaging with a form fit one on the other,
- and a shift clutch (38) which, in the event of a fault, can be actuated at least indirectly during the retraction of the brake lining (12) from the brake disc (13) and by means of which the electric motor (18) can be separated effectively from one part (28) of the threaded spindle (24),
**characterized by** the following features:
- the electric motor (18) engages on one part (27) of the threaded spindle (24), to the other part (28) which is in engagement with the nut (34) of the screw mechanism (16),
- a stop (35) limiting a return stroke is assigned at least indirectly to the nut (34) of the screw mechanism (16), the said nut being movable longitudinally on the threaded spindle (24),
- the two parts (27, 28) of the threaded spindle (24) can be separated by means of the shift clutch (38) during the at least indirect engagement of the nut (34) of the screw mechanism (16) against the stop (35).

2. Electromechanical wheel-braking device according to Claim 1, **characterized in that** one part (27) of the threaded spindle (24) is mounted in an axially stationary manner in a housing (14) of the wheel-braking device (10), whilst the other part (28) of the threaded spindle (24), the said other part being in engagement with the nut (24) of the screw mechanism (16), can be separated effectively from the one part (27) axially displaceably counter to spring force.

3. Electromechanical wheel-braking device according to Claim 2, **characterized in that** one part (28) of the threaded spindle (24) is penetrated centrally by an axially stationary tension rod (41) with a compression spring (43) which loads the one part (28) with a spring force directed opposite to the other part (27) of the threaded spindle (24).

4. Electromechanical wheel-braking device according to Claim 1 or 2, **characterized in that** one part (28) of the threaded spindle (24) is guided longitudinally displaceably, on the clutch side, on a tenon (33) of the other part (27) of the threaded spindle (24).

5. Electromechanical wheel-braking device according to Claim 4, **characterized in that** the shift clutch (38) is formed on the circumference of the tenon (33) and/or on the end face of the two parts (27, 28) of the threaded spindle (24).

6. Electromechanical wheel-braking device according to Claim 1 or 5, **characterized in that** the shift clutch (38) is designed as a denture clutch or dog clutch.

## Revendications

1. Dispositif de frein de roue électromécanique (10) pour véhicule automobile, comprenant :
- un moteur électrique (18) actionnant et desserrant le dispositif de frein de roue (10),
- un mécanisme à vis (16) convertissant le mouvement de rotation du moteur électrique (18) en un mouvement de translation, pour presser une garniture de frein (12) contre un disque de frein (13) et à le rétracter de ce dernier, le mécanisme à vis (16) comprenant un écrou (34) et une tige filetée (24) composée de deux parties (27, 28) en prise entre elles par complémentarité de forme,
- ainsi qu'un embrayage (38) actionné au moins indirectement en cas de dérangement lorsque la garniture de frein (12) est tirée en arrière par rapport au disque de frein (13), et au moyen duquel le moteur électrique (18) peut être séparé fonctionnellement d'une partie (28) de la tige filetée (24),
**caractérisé en ce que**
- le moteur électrique (18) attaque une partie (27) de la tige filetée (24), dont l'autre partie (28) est en prise avec l'écrou (34) du mécanisme à vis (16),
- une butée (35) qui limite la course de recul est associée au moins indirectement à l'écrou (34) du mécanisme à vis (16) qui peut se déplacer longitudinalement le long de la tige filetée (24), et
- les deux parties (27, 28) de la tige filetée (24) peuvent être séparées au moyen de l'embrayage (38) lorsque l'écrou (34) du mécanisme à vis (16) est au moins indirectement en prise avec la butée (35).

2. Dispositif de frein électromécanique selon la revendication 1,
**caractérisé en ce que**
l'une des parties (27) de la tige filetée (24) est montée rotative, immobile dans la direction axiale, dans un corps (14) du dispositif de frein de roue (10), tandis que l'autre partie (28) de la tige filetée (24) qui est en prise avec l'écrou (34) du mécanisme à vis (16) peut être séparée fonctionnellement de la partie (27) par une translation axiale à l'encontre d'une force élastique.

3. Dispositif de frein électromécanique selon la revendication 2,
**caractérisé en ce que**
l'une des parties (28) de la tige filetée (24) est traversée en son centre par une barre de traction (41) immobile dans la direction axiale et munie d'un ressort de compression (43) qui sollicite la partie (28) avec une force élastique dirigée vers l'autre partie (27) de la tige filetée (24).

4. Dispositif de frein électromécanique selon la revendication 1,
**caractérisé en ce que**
côté embrayage, l'une des parties (28) de la tige filetée (24) est guidée mobile en translation longitudinale sur un tourillon (33) de l'autre partie (27) de la tige filetée (24).

5. Dispositif de frein électromécanique selon la revendication 4,
**caractérisé en ce que**
l'embrayage (38) est formé à la périphérie du tourillon (33) et/ou en position frontale sur les deux parties (27, 28) de la tige filetée (24).

6. Dispositif de frein électromécanique selon la revendication 1 ou 2,
**caractérisé en ce que**
l'embrayage (38) est constitué par un embrayage à dents ou un embrayage à crabots.
